# EUROPÄISCHE PATENTANMELDUNG

(11) **EP 0 978 410 A2**
(43) Veröffentlichungstag der Anmeldung: **09.02.2000**
(21) Anmeldenummer: 99114406.4
(22) Anmeldetag: 22.07.1999
(51) Int. Cl.: B60K 41/14

(54) **Verfahren zur Steuerung der Antriebseinheit eines Kraftfahrzeuges mit stufenlosem Automatikgetriebe**

(30) Priorität: 01.08.1998 DE 19834750
(71) Anmelder: DaimlerChrysler AG, 70567 Stuttgart (DE)
(72) Erfinder: Wild, Horst, 91238 Engelthal (DE); Hommes, Georg, 85049 Ingoldstadt (DE); Wohlrab, Klaus, 91781 Weissenburg (DE)
(74) Vertreter: Kolb, Georg

(57) **Zusammenfassung**

Moderne Automatikgetriebe für Kraftfahrzeuge werden entweder mittels einer Schaltautomatik oder stufenlos betrieben. Der Sollwert der Antriebsdrehzahl - die gewünschte Motordrehzahl - wird dabei anhand von Kennlinienfeldern in Abhängigkeit der Fahrgeschwindigkeit und der über den Fahrpedal- oder Drosselklappenwinkel angeforderten Leistung vorgegeben. Diese fahrzustandsunabhängige feste Zuordnung zwischen Fahrpedalwinkel und Antriebsdrehzahl erweist sich hinsichtlich des Fahrkomforts als nachteilig.

Erfindungsgemäß wird anhand der angeforderten Leistung zwischen zwei Betriebszuständen unterschieden und zwar zwischen einem Normalbetriebszustand, in dem die Antriebsdrehzahl anhand eines oder mehrerer Kennlinienfelder vorgegeben wird, und einem Beschleunigungsbetriebszustand, in dem die Antriebsdrehzahl höher gewählt wird als im Normalbetriebszustand und derart vorgegeben wird, daß sie einen definierten, von der Fahrgeschwindigkeit abhängigen Verlauf aufweist.

Steuerung von Kraftfahrzeugs-Antriebseinheiten mit CVT-Getriebe.

## Beschreibung

Die Erfindung betrifft ein Verfahren zur Steuerung der Antriebseinheit eines Kraftfahrzeuges mit stufenlosem Automatikgetriebe wie es aus der EP 0 657 688 B1 bekannt ist.

Die Antriebseinheit von Kraftfahrzeugen - der Motor und das damit verbundene Getriebe - wird in zunehmendem Maße Regelungs- und Steuerungsmechanismen unterworfen. Moderne Automatikgetriebe für Kraftfahrzeuge werden entweder mittels einer Schaltautomatik oder stufenlos betrieben. Der Sollwert der Antriebsdrehzahl - die gewünschte Motordrehzahl - wird dabei anhand von Kennlinienfeldern in Abhängigkeit der Fahrgeschwindigkeit und der über den Fahrpedal- oder Drosselklappenwinkel angeforderten Leistung vorgegeben. Diese fahrzustandsunabhängige feste Zuordnung zwischen Fahrpedalwinkel und Antriebsdrehzahl erweist sich hinsichtlich des Fahrkomforts als nachteilig.

Der Erfindung liegt die Aufgabe zugrunde, ein Verfahren gemäß dem Oberbegriff des Patentanspruchs 1 anzugeben, das eine Verbesserung des der Fahrkomforts ermöglicht.

Die Aufgabe wird erfindungsgemäß durch die kennzeichnenden Merkmale des Patentanspruchs 1 gelöst. Vorteilhafte Weiterbildungen und Ausgestaltungen des Verfahrens ergeben sich aus den Unteransprüchen.

Erfindungsgemäß wird zwischen zwei Betriebszuständen unterschieden und zwar zwischen einem Normalbetriebszustand, in dem die Antriebsdrehzahl anhand von einem oder mehreren Kennlinienfeldern vorgegeben wird, und einem Beschleunigungsbetriebszustand, in dem die Antriebsdrehzahl höher gewählt wird als im Normalbetriebszustand und derart vorgegeben wird, daß sie einen definierten, von der Fahrgeschwindigkeit abhängigen Verlauf aufweist. Der Betriebszustand wird dabei anhand der vom Fahrer - beispielsweise über den Fahrpedalwinkel oder Drosselklappenwinkel - angeforderten Leistung gewählt.

Zur Festlegung des Betriebszustandes werden vorzugsweise zwei Schwellwertkennlinien vorgegeben, die oberhalb Fahrwiderstandleistungskennlinie liegen, welche den geschwindigkeitsabhängigen Leistungsbedarf zur Aufrechterhaltung einer konstanten Fahrgeschwindigkeit angibt. Bei oberhalb der beiden Schwellwertkennlinien liegendem wert der angeforderten Leistung wird der Beschleunigungsbetriebszustand und bei unterhalb der beiden Schwellwertkennlinien liegendem Wert der angeforderten Leistung der Normalbetriebszustand als Betriebszustand gewählt. Die Umschaltung von dem einen in den anderen Betriebszustand erfolgt dann, wenn bei einer Änderung der angeforderten Leistung die beiden Schwellwertkennlinien überschritten bzw. unterschritten werden. Bei einem zwischen den beiden Schwellwertkennlinien liegendem Wert der angeforderten Leistung wird der Betriebszustand nicht umgeschaltet. Dies führt zu einem Hystereseverhalten und somit zu einem stabilen Schaltverhalten. Vorteilhafterweise werden die Schwellwertkennlinien anhand eines Kennlinienfeldes in Abhängigkeit von aktuellen Betriebsparametern vorgegeben.

In einer vorteilhaften Weiterbildung des Verfahrens wird der Verlauf der Antriebsdrehzahl im Beschleunigungsbetriebszustand derart vorgegeben, daß er mit zunehmender Fahrgeschwindigkeit ansteigt. Als besonders vorteilhaft erweist sich ferner ein sprungartiger Anstieg der Antriebsdrehzahl beim übergang vom Normalbetriebszustand in den Beschleunigungsbetriebszustand sowie eine sprungartige Abnahme der Antriebsdrehzahl beim übergang vom Beschleunigungsbetriebszustand in den Normalbetriebszustand. Durch diese Maßnahmen wird die Fahrzeugdynamik gegenüber dem Normalbetriebszustand subjektiv erhöht, da der Fahrer durch das Fahrgeräusch eine Rückmeldung über die Leistungsänderung erhält. Er erhält diese Rückmeldung sofort und ist daher in der Lage, seinen Leistungswunsch besser zu dosieren.

Da die Raddrehzahl und somit die Fahrgeschwindigkeit bei Fahrzeugen mit stufenlosem Automatikgetriebe - derartige Getriebe werden üblicherweise als CVT-(continuous variable transmission)-Getriebe bezeichnet - sowohl durch die Antriebsdrehzahl als auch durch das Übersetzungsverhältnis, d. h. das Verhältnis Antriebsdrehzahl zu Raddrehzahl, vorgegeben wird und das Übersetzungsverhältnis innerhalb eines Aussteuerbereiches stufenlos variierbar ist, läßt sich die Antriebsdrehzahl für bestimmte Fahrgeschwindigkeitsbereiche durch Variation des Übersetzungsverhältnisses auf konstante Werte regeln. Eine derartige Regelung erhält man im Normalbetriebszustand aufgrund der Vorgabe der Antriebsdrehzahl durch die Kennlinienfelder. Dies führt zu einem niedrigen Kraftstoffverbrauch, da durch die Regelung der Antriebsdrehzahl auf den dem maximalen Motormoment entsprechenden Wert die Momentenreserve des Motors voll ausgenutzt werden kann. Des weiteren erhält man ein ruhigeres Antriebsdrehzahlverhalten, da nicht jede kleine Anderung des Fahrpedalwinkels eine Antriebsdrehzahländerung bewirkt.

Die Erfindung wird im folgenden anhand eines Ausführungsbeispiels unter Bezugnahme auf die Figuren näher beschrieben. Es zeigen:
- Figur 1: ein Leistungsdiagramm,
- Figur 2: ein erstes Beispiel eines Antriebsdrehzahlverlaufs,
- Figur 3: ein zweites Beispiel eines Antriebsdrehzahlverlaufs.

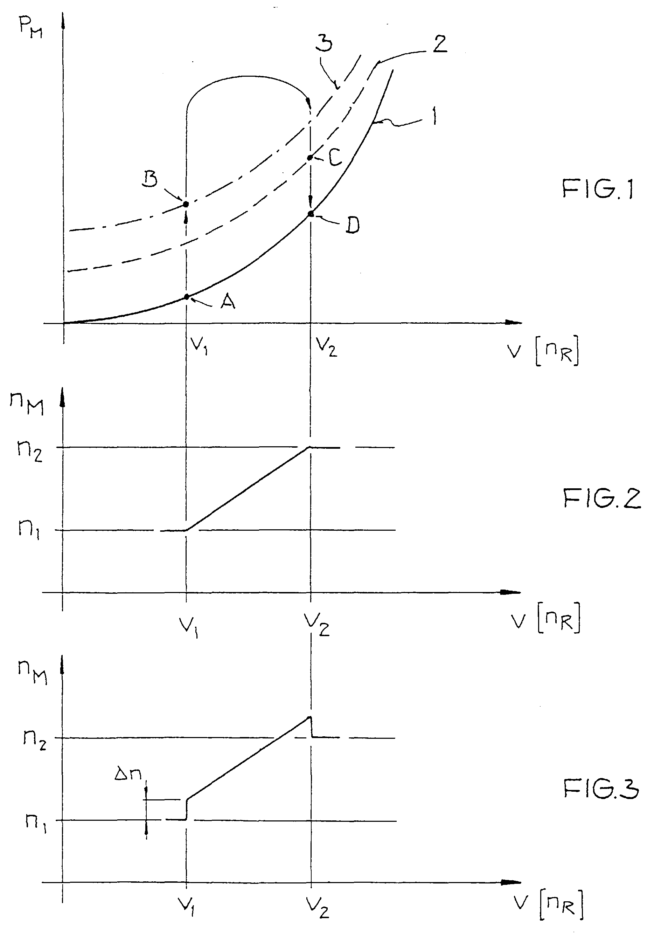

Im Leistungsdiagramm gemäß Figur 1 ist auf der Abszisse die Fahrgeschwindigkeit v oder die dazu proportionale Raddrehzahl n_{R} und auf der Ordinate die Leistung P_{M} des Motors eingetragen. Die mit 1 bezeichnete Kurve stellt die Fahrwiderstandsleistungskennlinie dar, d. h. den geschwindigkeitsabhängigen Verlauf der zur Aufrechterhaltung einer konstanten Fahrgeschwindigkeit v erforderlichen Leistung P_{M}. Über der Fahrwiderstandsleistungskennlinie liegen zwei voneinander beabstandete Schwellwertkennlinien - die untere Schwellwertkennlinie 2 und die obere Schwellwertkennlinie 3. Die untere Schwellwertkennlinie 2 ist derart definiert, daß ihr Abstand zur Fahrwiderstandsleistungskennlinie 1 eine Leistungsänderung darstellt, die einer Änderung des Fahrpedalwinkels um ca. 10% - 20% entspricht, und die obere Schwellwertkennlinie 3 ist derart definiert, daß ihr Abstand zur unteren Schwellwertkennlinie 2 eine Leistungsänderung darstellt, die einer Änderung des Fahrpedalwinkels um ca. 5% - 40% entspricht.

Der Fahrer gibt seinen Leistungswunsch durch Betätigung des Fahrpedals vor. Bei einem unter der unteren Schwellwertkennlinie 2 liegenden Wert der angeforderten Leistung P_{M}, beispielsweise im Betriebspunkt A bei der Fahrgeschwindigkeit v₁, wird die Antriebseinheit im Normalbetriebszustand betrieben. Sie wird im Betriebspunkt B, d. h. dann, wenn die angeforderte Leistung P_{M} einen die obere Schwellwertkennlinie 3 überschreitenden Wert annimmt, aus dem Normalbetriebszustand in den Beschleunigungsbetriebszustand geschaltet, und sie wird aus dem Beschleunigungsbetriebszustand erst dann wieder zurück in den Normalbetriebszustand geschaltet, wenn die angeforderte Leistung P_{M} einen unter der unteren Schwellwertkennlinie 2 liegenden Wert annimmt, d. h. im vorliegenden Fall im Betriebspunkt C. im Betriebspunkt D wird das Fahrzeug mit konstanter Geschwindigkeit bewegt. Bei einem zwischen den beiden Schwellwertkennlinien 2 und 3 liegenden Wert die angeforderte Leistung P_{M} wird der vorherige Betriebszustand beibehalten, so daß man eine Schalthysterese erhält, die ein dauerndes Umschalten zwischen den beiden Betriebszuständen verhindert.

Das Leistungsdiagramm aus Figur 1 gilt für bestimmte Parameterwerte, beispielsweise für einen Fahrbahnsteigungswert von 0%, d. h. für eine Fahrt in der Ebene, und für eine mittlere Beladung des Kraftfahrzeuges. Für andere Parameterwerte erhält man Leistungsdiagramme mit entsprechend verschobenen Fahrwiderstandsleistungs- und Schwellwertkennlinien.

Diese für die verschiedenen Parameterwerte gültigen Leistungsdiagramme bilden ein Leistungskennlinienfeld, aus dem anhand von aktuellen Betriebsparametern - insbesondere anhand der aktuellen Fahrgeschwindigkeit oder Raddrehzahl, des aktuellen Fahrpedal- oder Drosselklappenwinkels und der aktuellen Beschleunigung, die entweder anhand der Raddrehzahländerung oder mittels eines Beschleunigungssensors ermittelt wird, sowie ggf. anhand der Beladung, die beispielsweise mittels Rad- oder Achslastsensoren ermittelt wird, - der momentane Fahrbahnsteigungswert bestimmt wird und somit das dem aktuellen Betriebspunkt entsprechende und der Festlegung des Betriebszustandes zugrundezulegende Leistungsdiagramm ermittelt wird.

Im Normalbetriebszustand wird die Antriebsdrehzahl (Motordrehzahl) anhand von festen Kennlinienfeldern vorgegeben; durch diese Art der Drehzahlvorgabe erhält man in der Umgebung des aktuellen Betriebspunktes eine im wesentlichen konstante Antriebsdrehzahl. Im Beschleunigungsbetriebszustand wird die Antriebsdrehzahl hingegen derart vorgegeben, daß sie einen definierten - und somit von den Kennlinienfeldern unabhängigen - geschwindigkeitsabhängigen Verlauf aufweist. Dies erreicht man durch entsprechende Variation der Übersetzungsverhältnisses.

Gemäß Figur 2 wird die Antriebseinheit bei der Geschwindigkeit v₁ vom Normalbetriebszustand in den Beschleunigungsbetriebszustand umgeschaltet. Die Antriebsdrehzahl n_{M} steigt vom Wert n₁ mit zunehmender Fahrgeschwindigkeit v kontinuierlich - im vorliegenden Beispiel linear - an und erreicht bei der Geschwindigkeit v₂, bei der die Antriebseinheit aus dem Beschleunigungsbetriebszustand zurück in den Normalbetriebszustand geschaltet wird, den neuen Wert n₂. Die Steilheit des Antriebsdrehzahl-Anstiegs wird in Abhängigkeit des Fahrertyps, der mit gegeigneten Mitteln anhand seines Fahrverhaltens ermittelt wird, derart gewählt, daß sich ein vom Fahrer erwartetes Beschleunigungsverhalten ergibt.

Figur 3 zeigt einen vorteilhaften Antriebsdrehzahlverlauf, der sich von dem Drehzahlverlauf gemäß Figur 2 dadurch unterscheidet, daß die Antriebsdrehzahl n_{M} beim Übergang vom Normalbetriebszustand in den Beschleunigungsbetriebszustand um einen bestimmten, beispielsweise vom Fahrertyp abhängigen, Wert Δn sprungartig ansteigt und beim Übergang vom Beschleunigungsbetriebszustand in den Normalbetriebszustand sprungartig abnimmt.

## Patentansprüche

1. Verfahren zur Steuerung der Antriebseinheit eines Kraftfahrzeuges mit stufenlosem Automatikgetriebe, bei dem die Antriebsdrehzahl (n_{M}) in einem Normalbetriebszustand anhand von einem oder mehreren Kennlinienfeldern vorgegeben wird, dadurch gekennzeichnet, daß als weiterer Betriebszustand ein Beschleunigungsbetriebszustand definiert wird, in dem die Antriebsdrehzahl (n_{M}) höher gewählt wird als im Normalbetriebszustand und in dem der Antriebsdrehzahlverlauf geschwindigkeitsabhängig vorgegeben wird, und daß der Betriebszustand in Abhängigkeit der angeforderten Leistung gewählt wird.

2. Verfahren nach Anspruch 1, dadurch gekennzeichnet, daß
- eine Fahrwiderstandsleistungskennlinie (1) vorgegeben wird, die den geschwindigkeitsabhängigen Leistungsbedarf zur Aufrechterhaltung einer konstanten Fahrgeschwindigkeit (v) angibt,
- zwei oberhalb dieser Fahrwiderstandsleistungskennlinie (1) liegende Schwellwertkennlinien (2, 3) vorgegeben werden,
- die Antriebseinheit bei einem die beiden Schwellwertkennlinien (2, 3) überschreitenden wert der angeforderten Leistung (P_{M}) in den Beschleunigungsbetriebszustand geschaltet wird und bei einem die beiden Schwellwertkennlinien (2, 3) unterschreitenden wert der angeforderten Leistung (P_{M}) in den Normalbetriebszustand geschaltet wird.

3. Verfahren nach Anspruch 2, dadurch gekennzeichnet, daß die Schwellwertkennlinien (2, 3) anhand eines Leistungskennlinienfeldes in Abhängigkeit von aktuellen Betriebsparametern vorgegeben werden.

4. Verfahren nach einem der vorherigen Ansprüche, dadurch gekennzeichnet, daß die Antriebsdrehzahl (n_{M}) im Beschleunigungsbetriebszustand mit zunehmender Fahrgeschwindigkeit (v) ansteigt.

5. Verfahren nach einem der vorherigen Ansprüche, dadurch gekennzeichnet, daß die Antriebsdrehzahl (n_{M}) beim Übergang vom Normalbetriebszustand in den Beschleunigungsbetriebszustand sprungartig ansteigt.

6. Verfahren nach einem der vorherigen Ansprüche, dadurch gekennzeichnet, daß die Antriebsdrehzahl (n_{M}) beim Übergang von Beschleunigungsbetriebszustand in den Normalbetriebszustand sprungartig abnimmt.
